# EUROPEAN PATENT APPLICATION

(11) **EP 4 629 064 A1**
(43) Date of publication of application: **08.10.2025**
(21) Application number: 23910323.7
(22) Date of filing: 21.12.2023
(51) Int. Cl.: G06F 8/71

(54) **PRODUCT SERVICE CONFIGURATION METHOD AND DEVICE**

(30) Priority: 29.12.2022 CN 202211714980
(71) Applicant: Shenzhen Yinwang Intelligent Technologies Co., Ltd., Shenzhen, Guangdong 518110 (CN)
(72) Inventor: MAO, Yintao, Shenzhen, Guangdong 518129 (CN); WAN, Jin, Shenzhen, Guangdong 518129 (CN)
(74) Representative: Pfenning, Meinig & Partner mbB
(86) International application number: PCT/CN2023/140516
(87) International publication number: WO 2024/140394

(57) **Abstract**

This application provides a product service configuration method and apparatus. The method includes: obtaining a platform baseline configuration file, where the platform baseline configuration file includes a first configuration item for a platform baseline; obtaining a first product service configuration file, where the first product service configuration file includes a second configuration item for a first product service, and the first configuration item and the second configuration item have a same identifier; and generating a combined configuration file based on the platform baseline configuration file and the first product service configuration file, where the combined configuration file includes a third configuration item, and the third configuration item is obtained based on the first configuration item and the second configuration item that have the same identifier. Solutions of this application are different from a conventional manner of resolving a configuration item conflict based on manual negotiation in that software development efficiency of a product can be improved.

## Description

This application claims priority to Chinese Patent Application No. 202211714980.2, filed with the China National Intellectual Property Administration on December 29, 2022 and entitled "PRODUCT SERVICE CONFIGURATION METHOD AND APPARATUS", which is incorporated herein by reference in its entirety.

### TECHNICAL FIELD

This application relates to the field of intelligent vehicle technologies, and more specifically, to a product service configuration method and apparatus.

### BACKGROUND

Based on an automotive open system architecture (automotive open system architecture, AUTOSAR), software development of a product (that is, a vehicle or a vehicle-mounted component) usually relates to collaboration among a plurality of teams. During collaborative development among the plurality of teams, manual coordination is needed among the plurality of teams to resolve a configuration item conflict problem.

However, because configuration items related to an actual software development process of the product are excessively complex, a workload of manual coordination processing is heavy, resulting in low software development efficiency of the product.

### SUMMARY

Embodiments of this application provide a product service configuration method and apparatus, so that software development efficiency of a product can be improved.

According to a first aspect, a product service configuration method is provided, including: obtaining a platform baseline configuration file, where the platform baseline configuration file includes a first configuration item for a platform baseline; obtaining a first product service configuration file, where the first product service configuration file includes a second configuration item for a first product service, and the first configuration item and the second configuration item have a same identifier; and generating a combined configuration file based on the platform baseline configuration file and the first product service configuration file, where the combined configuration file includes a third configuration item, and the third configuration item is obtained based on the first configuration item and the second configuration item that have the same identifier.

The first configuration item and the second configuration item that have the same identifier may be understood as configuration items that conflict with each other.

In this application, the platform baseline configuration file and the first product service configuration file are first obtained, and then the combined configuration file is obtained based on the obtained configuration files. In addition, when a plurality of configuration items that have a same identifier appear during combination, a configuration item is determined based on the plurality of configuration items, to ensure uniqueness of configuration items in the combined configuration file, so that a configuration item conflict problem can be adaptively resolved. In addition, solutions of this application are different from a conventional manner in which manual negotiation is needed in that flexibility is higher, and software development efficiency can be improved.

With reference to the first aspect, in some implementations of the first aspect, the first configuration item and the second configuration item are stored in a cache, and the method further includes: obtaining an update instruction for the first configuration item and/or the second configuration item; and updating the first configuration item and/or the second configuration item in the cache based on the update instruction.

In this application, the first configuration item and the second configuration item may be stored in the cache, so that when the first configuration item and/or the second configuration item need/needs to be updated, the first configuration item and/or the second configuration item may be directly updated in the cache, to implement real-time update and combination of the first configuration item and/or the second configuration item.

With reference to the first aspect, in some implementations of the first aspect, the third configuration item is the second configuration item.

In this application, when the combined configuration file is generated based on the platform baseline configuration file and the first product service configuration file, and the first configuration item in the platform baseline configuration file and the second configuration item in the first product service configuration file have the same identifier, the third configuration item in the combined configuration file may be directly obtained based on the second configuration item in the first product service configuration file, to resolve the configuration item conflict problem while a configuration item of a product service is prioritized.

With reference to the first aspect, in some implementations of the first aspect, the first configuration item includes a first attribute label, the third configuration item is obtained from the first configuration item and the second configuration item based on the first attribute label, and the first attribute label indicates an operation permission for the first configuration item.

In this application, when the first configuration item includes the first attribute label, the third configuration item may be obtained from the first configuration item and the second configuration item based on the first attribute label of the first configuration item. For example, when the first attribute label indicates that a modification operation cannot be performed on the first configuration item, the first configuration item may be used as the third configuration item.

With reference to the first aspect, in some implementations of the first aspect, the second configuration item includes a second attribute label, and the second attribute label indicates an operation permission for the second configuration item.

In this application, when the second configuration item includes the second attribute label, the third configuration item may be obtained from the first configuration item and the second configuration item based on the second attribute label of the second configuration item.

With reference to the first aspect, in some implementations of the first aspect, the method further includes: obtaining a second product service configuration file, where the second product service configuration file includes a fourth configuration item for a second product service, the fourth configuration item has the same identifier, and the third configuration item is obtained based on the first configuration item, the second configuration item, and the fourth configuration item that have the same identifier.

In this application, the second product service configuration file may be obtained while the platform baseline configuration file and the first product service configuration file are obtained, and the third configuration item is obtained based on the fourth configuration item in the second product service configuration file, the first configuration item, and the second configuration item that have the same identifier, so that uniqueness of the third configuration item can also be ensured when a platform configuration file and a plurality of product service configuration files are combined, so that the configuration item conflict problem can be resolved.

According to a second aspect, a product service configuration apparatus is provided, including: an obtaining module, configured to obtain a platform baseline configuration file, where the platform baseline configuration file includes a first configuration item for a platform baseline; and further configured to obtain a first product service configuration file, where the first product service configuration file includes a second configuration item for a first product service, and the first configuration item and the second configuration item have a same identifier; and a processing module, configured to generate a combined configuration file based on the platform baseline configuration file and the first product service configuration file, where the combined configuration file includes a third configuration item, and the third configuration item is obtained based on the first configuration item and the second configuration item that have the same identifier.

With reference to the second aspect, in some implementations of the second aspect, the first configuration item and the second configuration item are stored in a cache. The obtaining module is further configured to obtain an update instruction for the first configuration item and/or the second configuration item. The processing module is further configured to update the first configuration item and/or the second configuration item in the cache based on the update instruction.

With reference to the second aspect, in some implementations of the second aspect, the third configuration item is the second configuration item.

With reference to the second aspect, in some implementations of the second aspect, the first configuration item includes a first attribute label, the third configuration item is obtained from the first configuration item and the second configuration item based on the first attribute label, and the first attribute label indicates an operation permission for the first configuration item.

With reference to the second aspect, in some implementations of the second aspect, the second configuration item includes a second attribute label, and the second attribute label indicates an operation permission for the second configuration item.

With reference to the second aspect, in some implementations of the second aspect, the obtaining module is further configured to obtain a second product service configuration file, where the second product service configuration file includes a fourth configuration item for a second product service, the fourth configuration item has the same identifier, and the third configuration item is obtained based on the first configuration item, the second configuration item, and the fourth configuration item that have the same identifier.

According to a third aspect, a product service configuration apparatus is provided, including an input/output interface, a processor, and a memory. The processor is configured to control the input/output interface to receive and send a signal or information. The memory is configured to store a computer program. The processor is configured to invoke the computer program from the memory and run the computer program, to enable the product service configuration apparatus to perform the method according to the first aspect or any one of the possible implementations of the first aspect.

According to a fourth aspect, a computer-readable storage medium is provided. The computer-readable storage medium stores program code. When the program code is run on a computer, the computer is enabled to perform the method according to the first aspect or any one of the possible implementations of the first aspect.

According to a fifth aspect, a computer program product is provided, including instructions. When the instructions are run on a computer, the method according to the first aspect or any one of the possible implementations of the first aspect is performed.

According to a sixth aspect, a computing device is provided, including at least one processor and a memory. The at least one processor is coupled to the memory, and is configured to read and execute instructions in the memory, to perform the method according to the first aspect or any one of the possible implementations of the first aspect.

According to a seventh aspect, a chip system is provided. The chip system includes a processor configured to invoke a computer program or computer instructions stored in a memory, to enable the processor to perform the method according to any one of the possible implementations of the first aspect.

With reference to the seventh aspect, in a possible implementation, the processor is coupled to the memory through an interface.

With reference to the seventh aspect, in a possible implementation, the chip system further includes the memory, and the memory stores the computer program or the computer instructions.

### BRIEF DESCRIPTION OF DRAWINGS

FIG. 1 is an example diagram of a system architecture for software development according to an embodiment of this application;
FIG. 2 is an example diagram of a product service configuration method according to an embodiment of this application;
FIG. 3 is an example diagram of a manner of adding an attribute label according to an embodiment of this application;
FIG. 4 is an example diagram of version management of a configuration item according to an embodiment of this application;
FIG. 5 is an example diagram of an integrated architecture of a platform and a product according to an embodiment of this application;
FIG. 6 is an example diagram of another integrated architecture of a platform and a product according to an embodiment of this application;
FIG. 7 is an example diagram of textual differences between configurations according to an embodiment of this application;
FIG. 8 is an example diagram of source tracing under a secondary baseline configuration according to an embodiment of this application;
FIG. 9 is a block diagram of a product service configuration apparatus according to an embodiment of this application; and
FIG. 10 is a block diagram of a hardware structure of a product service configuration apparatus according to an embodiment of this application.

### DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists.

In this application, "at least one item (piece)" means one or more items, and "a plurality of items" means two or more items. At least one of the following items (pieces) or a similar expression thereof indicates any combination of these items, including a single item (piece) or any combination of a plurality of items (pieces). For example, at least one item (pieces) of a, b, or c may indicate: a, b, c, a and b, a and c, b and c, or a, b, and c, where a, b, and c may be singular or plural.

Prefixes such as "first" and "second" in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefixes should not constitute a redundant limitation.

Solutions of this application may be applied to an intelligent driving device. The intelligent driving device may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The following describes technical solutions of embodiments in this application with reference to accompanying drawings.

Based on an AUTOSAR, software development of a product usually relates to collaboration among a plurality of teams (or a plurality of persons in a same team). During collaborative development among the plurality of teams (or the plurality of persons in the same team), manual coordination is needed among the plurality of teams (or the plurality of persons in the same team) to resolve a configuration item conflict problem. The product may be a vehicle, or may be a vehicle-mounted component such as a specific electronic control unit (electronic control unit, ECU) in a vehicle.

However, because configuration items related to an actual software development process are excessively complex, a workload of manual coordination processing is heavy, resulting in low software development efficiency.

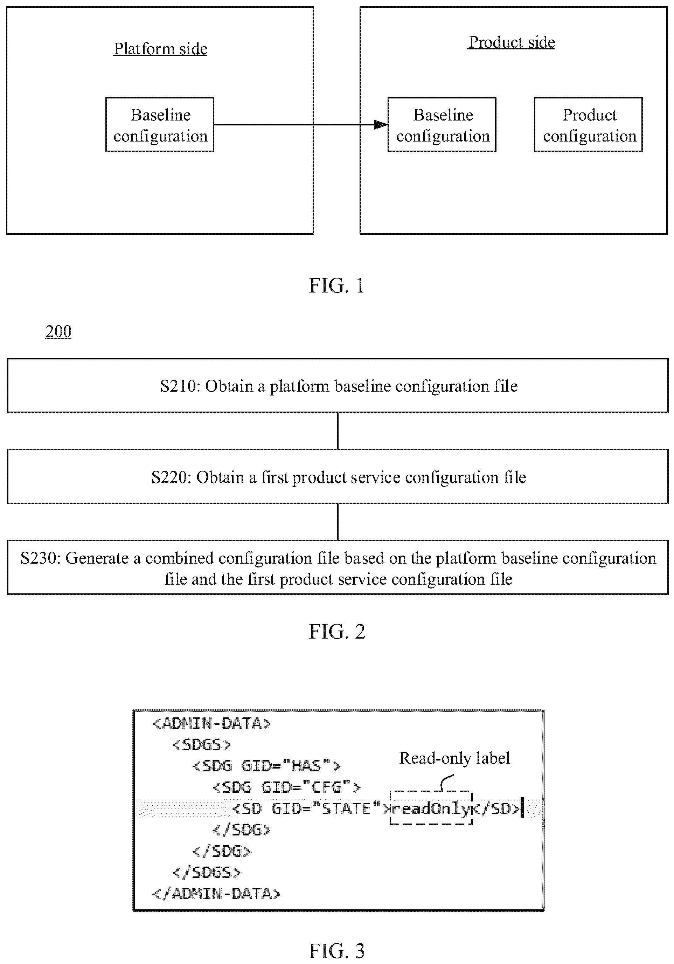

Based on this, as shown in FIG. 1, software development is abstractly divided into a platform side and a product side in this application. The platform side is mainly used to carry out customized adaptation development according to different function security requirements and specific hardware adaptation requirements, and provide a platform baseline configuration for a product. The product side is used to independently update a communication matrix, change a software component (software component, SWC) architecture, and configure some basic software (basic software, BSW) modules based on the platform baseline configuration, and deliver a final integrated service application. Based on the platform side and the product side, the development on the product side can be based on the baseline configuration on the platform side. In addition, configurations on the platform side and the product side are independent of each other, a modification on the product side can be saved only in the product, and the configurations on the platform side and the product side can evolve independently.

During specific implementation of this application, a platform baseline configuration file and a product service configuration file are first obtained, and then a combined configuration file is obtained based on the obtained configuration files. In addition, when a plurality of configuration items that have a same identifier appear during combination, a configuration item is determined based on the plurality of configuration items, to ensure uniqueness of configuration items in the combined configuration file, so that a configuration item conflict problem can be adaptively resolved. In addition, the solutions of this application are different from a conventional manner in which manual negotiation is needed in that flexibility is higher, and software development efficiency can be improved.

FIG. 2 is an example diagram of a product service configuration method according to an embodiment of this application. As shown in FIG. 2, the method 200 includes steps S210 to S230. The following describes these steps.

S210: Obtain a platform baseline configuration file. The platform baseline configuration file includes a first configuration item for a platform baseline.

S220: Obtain a first product service configuration file. The first product service configuration file includes a second configuration item for a first product service.

The first configuration item and the second configuration item have a same identifier. The first configuration item and the second configuration item that have the same identifier may be understood as configuration items that conflict with each other.

S230: Generate a combined configuration file based on the platform baseline configuration file and the first product service configuration file. It should be understood that the configuration combination operation may be understood as product software development performed by the product side based on a platform baseline configuration.

The combined configuration file includes a third configuration item, and the third configuration item is obtained based on the first configuration item and the second configuration item that have the same identifier.

Optionally, when a product service configuration needs to be prioritized, the third configuration item in the combined configuration file may be obtained based on the second configuration item in the first product service configuration file, that is, the second configuration item may be used as the third configuration item.

Optionally, the first configuration item may include a first attribute label. The first attribute label indicates an operation permission for the first configuration item, that is, indicates whether an operation can be performed on the first configuration item.

When the first configuration item includes the first attribute label, the third configuration item may be obtained from the first configuration item and the second configuration item based on the first attribute label. For example, when the first attribute label indicates that a modification operation cannot be performed on the first configuration item, the first configuration item may be used as the third configuration item.

Optionally, the first configuration item may further include at least one of the following attribute labels: a visible attribute label, an edit attribute label, or another extended attribute label. The visible attribute label may include a visible label or a hidden label, and the edit attribute label may include a label that can be modified or a label that cannot be modified.

Optionally, the attribute label may be implemented by adding a customized attribute field to a configuration file, as shown in FIG. 3. It should be understood that, a read-only label in FIG. 3 means that the visible attribute of the configuration item is visible, and the edit attribute is unmodifiable, that is, the configuration item can only be read, but cannot be modified.

In an actual operation, in addition to being set at a configuration item node, the attribute label may also be set at a file root node, that is, the attribute label may have different mark granularities in a configuration file. In addition, the configuration file may further include a file split attribute label, and the file split attribute label indicates whether the configuration file can be split.

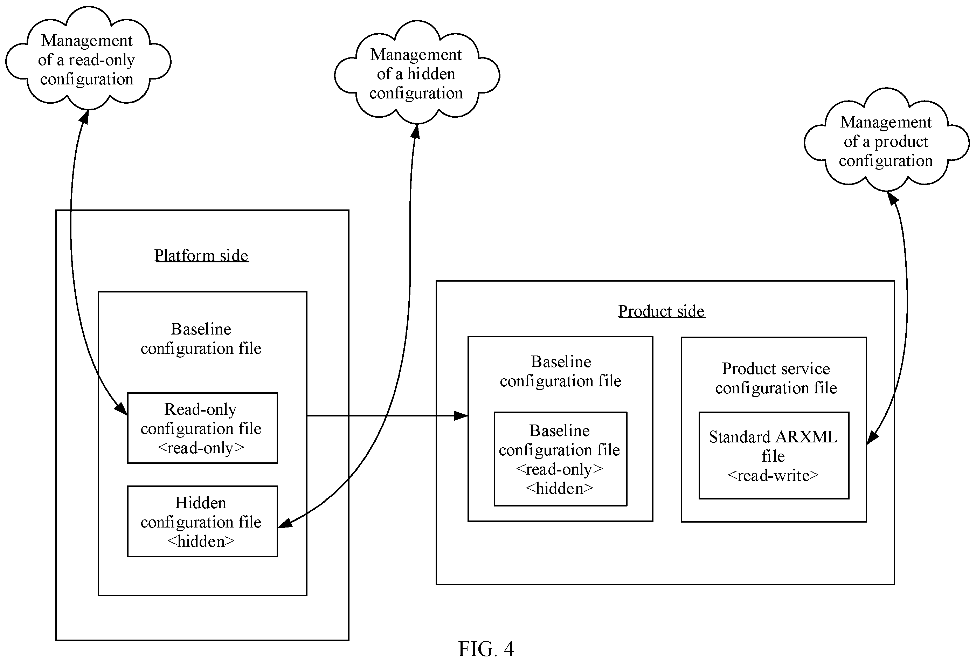

Configuration items can be classified based on the preceding attribute labels, and a configuration file can be split based on classification of the configuration items. For example, as shown in FIG. 4, the baseline configuration file on the platform side may be split into a read-only configuration file and a hidden configuration file, and the product service configuration file may be uniformly classified into a standard AUTOSAR XML (ARXML for short) file, and content in the ARXML file can be read and written.

Based on configuration item classification and file splitting, version management of configuration items with different attributes can be further implemented. For example, based on classification and splitting shown in FIG. 4, management of a read-only configuration, management of a hidden configuration, and management of a product configuration can be implemented. In addition, an attribute label mechanism can be used to trace a configuration version.

Optionally, the second configuration item may include a second attribute label. The second attribute label indicates an operation permission for the second configuration item, that is, indicates whether an operation can be performed on the second configuration item.

In this application, when the second configuration item includes the second attribute label, the third configuration item may be obtained from the first configuration item and the second configuration item based on the second attribute label of the second configuration item. It should be understood that for other descriptions of the second attribute label, refer to the foregoing descriptions of the attribute labels. Details are not described again.

The first configuration item and the second configuration item may be stored in a cache. In this case, the method 200 may further include: obtaining an update instruction for the first configuration item and/or the second configuration item; and updating the first configuration item and/or the second configuration item in the cache based on the update instruction, or updating the first configuration item and/or the second configuration item in the cache based on the update instruction and content cached in the cache. In this way, real-time update and combination of the first configuration item and/or the second configuration item can be implemented, and efficiency of a subsequent evolutionary update can be improved.

Optionally, the method 200 may further include: obtaining a second product service configuration file, where the second product service configuration file includes a fourth configuration item for a second product service, the fourth configuration item has the same identifier, and the third configuration item is obtained based on the first configuration item, the second configuration item, and the fourth configuration item that have the same identifier. Based on this, uniqueness of the third configuration item can also be ensured when a platform configuration file and a plurality of product service configuration files are combined, so that a configuration item conflict problem can be resolved.

As described above, the product side may implement service logic of the product side based on the platform side. Therefore, in an actual operation, a secondary baseline may be further configured on the product side, so that the platform side and the product side integrally serve as a new platform side for external delivery.

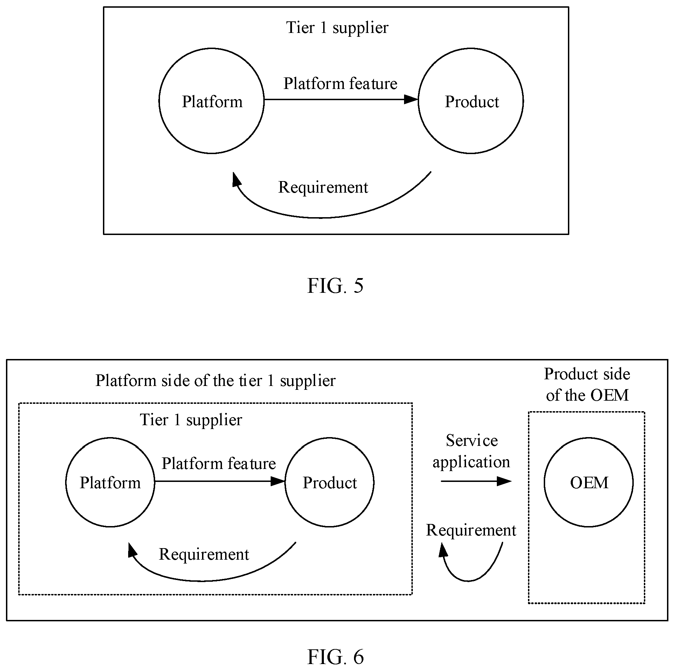

For example, integration of a tier one (tier one, TIER 1) supplier needs to support a plurality of different product services. In consideration of this, software integration of the tier 1 supplier may be abstractly divided into a platform side and a product side, as shown in FIG. 5. The platform side may receive a requirement fed back by the product side and perform iterative evolution, and the platform side may further deliver a platform feature to the product side. The product side may configure a software application based on a platform baseline configuration, and deliver a finally integrated service application.

With emergence of a software-defined automobile, an original equipment manufacturer (original equipment manufacturer, OEM) gradually expects to further configure underlying software. Therefore, the tier 1 supplier may integrally serve as the platform side, and the OEM may serve as the product side. That is, the tier 1 supplier provides a basic software platform, and the OEM completes an entire process from an application design to integration of the underlying software according to a requirement of the OEM, as shown in FIG. 6. In this scenario, the tier 1 supplier needs to open some integration permissions for the underlying software to the OEM. Therefore, a secondary baseline needs to be configured for the product side of the tier 1 supplier. Similarly, the platform side of the tier 1 supplier may receive a requirement fed back by the product side of the OEM and perform iterative evolution, and the platform side of the tier 1 supplier may further deliver a service application to the product side of the OEM. The product side of the OEM may configure a software application based on the service application, and deliver a finally integrated service application.

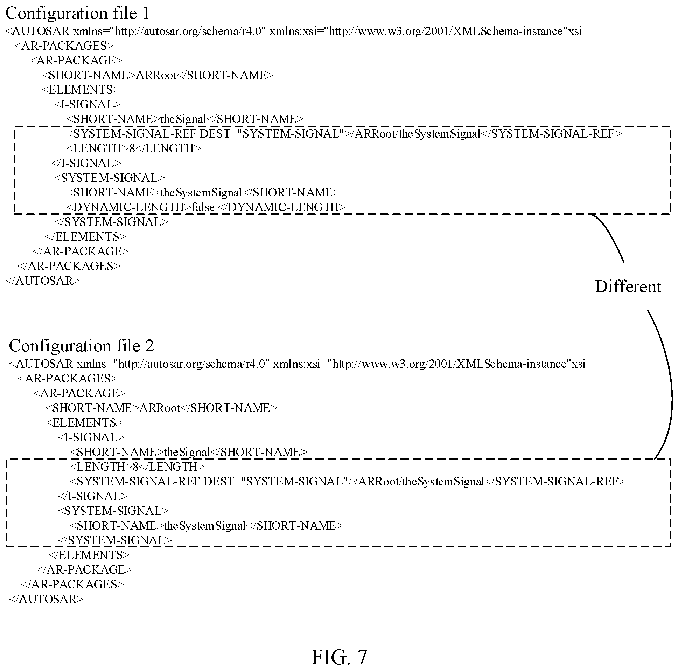

In addition, in an actual development project, a configuration file version is usually managed by using a code version management tool such as Git or SVN, and the code version management tool does not adapt to a model-based scenario. As shown in FIG. 7, two configuration files that have textual differences are consistent from a perspective of a parsed model and express a same model meaning. Therefore, to satisfy continuous iterative evolution of configurations between a platform and a product and avoid textual differences caused by model serialization or a configuration modification, configuration source tracing in a secondary baseline scenario needs to be implemented at the same time.

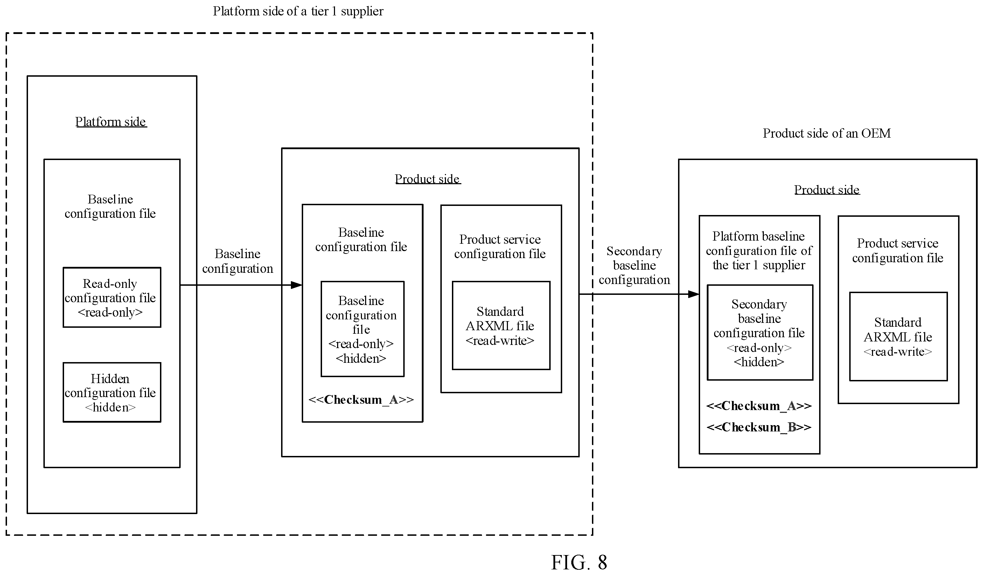

Based on this, as shown in FIG. 8, when an internal baseline on the platform side of the tier 1 supplier is configured, checksum information (for example, <<Checksum_A>> shown in the figure) may be added to a configuration based on a HASH algorithm. Then, when the secondary baseline is configured, historical checksum information (for example, <<Checksum_A>> shown in the figure) is retained, and newly configured checksum information (for example, <<Checksum_B>> shown in the figure) is added to the configuration file. In this way, source tracing of a current configuration can be implemented, and version management of the configuration file can be optimized.

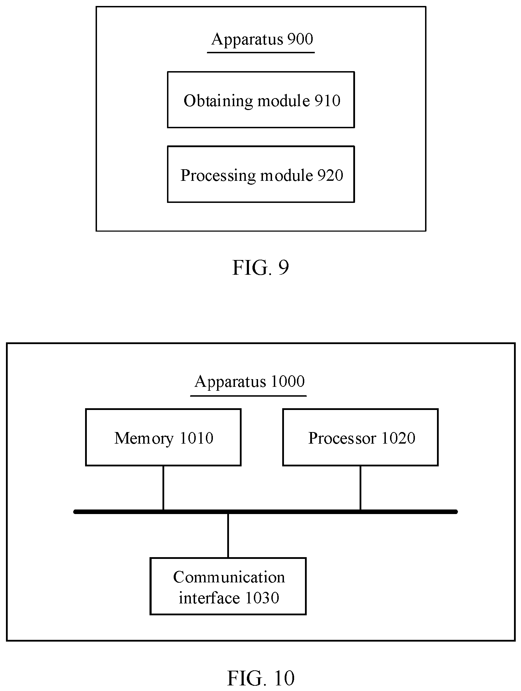

FIG. 9 is a block diagram of a product service configuration apparatus according to an embodiment of this application. The apparatus 900 includes an obtaining module 910 and a processing module 920.

The obtaining module 910 is configured to obtain a platform baseline configuration file, where the platform baseline configuration file includes a first configuration item for a platform baseline. The obtaining module 910 is further configured to obtain a first product service configuration file, where the first product service configuration file includes a second configuration item for a first product service. The first configuration item and the second configuration item have a same identifier.

The processing module 920 is configured to generate a combined configuration file based on the platform baseline configuration file and the first product service configuration file. The combined configuration file includes a third configuration item, and the third configuration item is obtained based on the first configuration item and the second configuration item that have the same identifier.

Optionally, the first configuration item and the second configuration item may be stored in a cache. In this case, the obtaining module 910 may be further configured to obtain an update instruction for the first configuration item and/or the second configuration item. The processing module 920 may be further configured to update the first configuration item and/or the second configuration item in the cache based on the update instruction.

Optionally, the third configuration item may be the second configuration item.

Optionally, the first configuration item may include a first attribute label, and the first attribute label may indicate an operation permission for the first configuration item. Based on this, the third configuration item may be obtained from the first configuration item and the second configuration item based on the first attribute label.

Optionally, the second configuration item may include a second attribute label, and the second attribute label may indicate an operation permission for the second configuration item.

Optionally, the obtaining module 910 may be further configured to obtain a second product service configuration file, where the second product service configuration file includes a fourth configuration item for a second product service, and the fourth configuration item has the same identifier. In this case, the third configuration item may be obtained based on the first configuration item, the second configuration item, and the fourth configuration item that have the same identifier.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of the units in the apparatus. The processor is, for example, a general-purpose processor, such as a central processing unit (central processing unit, CPU) or a microprocessor, and the memory is a memory in the apparatus or a memory outside the apparatus. Alternatively, the units in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the foregoing units. All the units in the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In embodiments of this application, the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of system-on-a-chip (system-on-a-chip, SOC). The SOC may include at least one processor configured to implement any one of the methods or implement functions of the units of the apparatus. Types of the at least one processor may be different, for example, the at least one processor includes a CPU and an FPGA, a CPU and an artificial intelligence processor, or a CPU and a GPU.

FIG. 10 is a block diagram of a hardware structure of a product service configuration apparatus according to an embodiment of this application. Optionally, the apparatus 1000 may be specifically a computer device. The apparatus 1000 includes a memory 1010, a processor 1020, and a communication interface 1030. The memory 1010, the processor 1020, and the communication interface 1030 may be communicatively connected to each other through a bus.

The memory 1010 may be a read-only memory (read-only memory, ROM), a static storage device, a dynamic storage device, or a random access memory (random access memory, RAM). The memory 1010 may store a program. When the program stored in the memory 1010 is executed by the processor 1020, the processor 1020 is configured to perform the steps of the product service configuration method 200 in embodiments of this application.

The processor 1020 may be a general-purpose CPU, a microprocessor, an ASIC, a GPU, or one or more integrated circuits, and is configured to execute a related program, to implement the product service configuration method 200 in the method embodiments of this application.

The processor 1020 may alternatively be an integrated circuit chip and has a signal processing capability. In an implementation process, the product service configuration method 200 in this application may be implemented by using an integrated logic circuit of hardware in the processor 1020 or instructions in a form of software.

The communication interface 1030 uses a transceiver apparatus, for example but not for limitation, a transceiver, to implement communication between the apparatus 1000 and another device or a communication network.

An embodiment of this application further provides a computer-readable storage medium, including instructions. When the instructions are run on a computer, the computer is enabled to perform the foregoing method 200.

An embodiment of this application further provides a computer program product, including instructions. When the instructions are run on a computer, the method 200 is performed.

An embodiment of this application further provides a computing device, including at least one processor and a memory. The at least one processor is coupled to the memory, and is configured to read and execute instructions in the memory, to perform the method 200.

An embodiment of this application further provides a chip. The chip includes a processor and a data interface. The processor reads, through the data interface, instructions stored in a memory, to perform the foregoing method 200, or the chip performs the foregoing method 200 through a hardware circuit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A product service configuration method, comprising:
obtaining a platform baseline configuration file, wherein the platform baseline configuration file comprises a first configuration item for a platform baseline;
obtaining a first product service configuration file, wherein the first product service configuration file comprises a second configuration item for a first product service, and the first configuration item and the second configuration item have a same identifier; and
generating a combined configuration file based on the platform baseline configuration file and the first product service configuration file, wherein the combined configuration file comprises a third configuration item, and the third configuration item is obtained based on the first configuration item and the second configuration item that have the same identifier.

2. The method according to claim 1, wherein the first configuration item and the second configuration item are stored in a cache, and the method further comprises:
obtaining an update instruction for the first configuration item and/or the second configuration item; and
updating the first configuration item and/or the second configuration item in the cache based on the update instruction.

3. The method according to claim 1 or 2, wherein the third configuration item is the second configuration item.

4. The method according to claim 1 or 2, wherein the first configuration item comprises a first attribute label, the third configuration item is obtained from the first configuration item and the second configuration item based on the first attribute label, and the first attribute label indicates an operation permission for the first configuration item.

5. The method according to claim 4, wherein the second configuration item comprises a second attribute label, and the second attribute label indicates an operation permission for the second configuration item.

6. The method according to any one of claims 1 to 5, wherein the method further comprises:
obtaining a second product service configuration file, wherein the second product service configuration file comprises a fourth configuration item for a second product service, the fourth configuration item has the same identifier, and the third configuration item is obtained based on the first configuration item, the second configuration item, and the fourth configuration item that have the same identifier.

7. A product service configuration apparatus, comprising:
an obtaining module, configured to obtain a platform baseline configuration file, wherein the platform baseline configuration file comprises a first configuration item for a platform baseline; and further configured to obtain a first product service configuration file, wherein the first product service configuration file comprises a second configuration item for a first product service, and the first configuration item and the second configuration item have a same identifier; and
a processing module, configured to generate a combined configuration file based on the platform baseline configuration file and the first product service configuration file, wherein the combined configuration file comprises a third configuration item, and the third configuration item is obtained based on the first configuration item and the second configuration item that have the same identifier.

8. The apparatus according to claim 7, wherein the first configuration item and the second configuration item are stored in a cache, and the obtaining module is further configured to:
obtain an update instruction for the first configuration item and/or the second configuration item; and
the processing module is further configured to update the first configuration item and/or the second configuration item in the cache based on the update instruction.

9. The apparatus according to claim 7 or 8, wherein the third configuration item is the second configuration item.

10. The apparatus according to claim 7 or 8, wherein the first configuration item comprises a first attribute label, the third configuration item is obtained from the first configuration item and the second configuration item based on the first attribute label, and the first attribute label indicates an operation permission for the first configuration item.

11. The apparatus according to claim 10, wherein the second configuration item comprises a second attribute label, and the second attribute label indicates an operation permission for the second configuration item.

12. The apparatus according to any one of claims 7 to 11, wherein the obtaining module is further configured to:
obtain a second product service configuration file, wherein the second product service configuration file comprises a fourth configuration item for a second product service, the fourth configuration item has the same identifier, and the third configuration item is obtained based on the first configuration item, the second configuration item, and the fourth configuration item that have the same identifier.

13. A product service configuration apparatus, comprising an input/output interface, a processor, and a memory, wherein the processor is configured to control the input/output interface to receive and send a signal or information, the memory is configured to store a computer program, and the processor is configured to: invoke the computer program from the memory and run the computer program, to enable the product service configuration apparatus to perform the method according to any one of claims 1 to 6.

14. A computer-readable storage medium, wherein the computer-readable storage medium stores program code, and when the program code is run on a computer, the computer is enabled to perform the method according to any one of claims 1 to 6.

15. A chip, wherein the chip comprises a processor and a data interface, and the processor reads, through the data interface, instructions stored in a memory, to perform the method according to any one of claims 1 to 6.
